# EUROPEAN PATENT SPECIFICATION

(11) **EP 1 329 661 B1**
(45) Date of publication and mention of the grant of the patent: **15.11.2006**
(21) Application number: 03001019.3
(22) Date of filing: 17.01.2003
(51) Int. Cl.: F16L 45/00

(54) **Cleanable pipe for discharge system**
Reinigbares Rohr für ein Ablaufsystem
Tuyaux nettoyable pour un système de déchargement

(30) Priority: 18.01.2002 DK 200200085
(43) Date of publication of application: 23.07.2003
(73) Proprietor: Blücher Metal A/S, 7480 Vildbjerg (DK)
(72) Inventor: Lohmann, Hans, 4180 Soro (DK)
(74) Representative: Nielsen, Leif

(56) References cited:
- WO-A-89/05418
- US-A- 3 624 794
- US-A- 3 724 505

## Description

The present invention concerns a cleaning tube of the type adapted for mounting in pipe systems and preferably in drainage systems made of stainless steel, where the cleaning tube is provided with a cleanout door, which by opening provides access to the interior of the tube through a cleanout opening, the cleaning tube being adapted for mounting in pipe sections where the orientation of the tube between vertical and horizontal planes is without significance for the function of the cleaning tube, and where the cleaning tube is made with a cleanout opening having a dimension in transverse and/or longitudinal direction substantially corresponding to the internal diameter of the cleaning tube.

Cleaning tubes with an opening closed with a cleanout door are commonly known and have been regularly used for a long time. A cleaning tube may be inserted as a module in a pipe system consisting of a number of pipe elements with each their spigot end and with each their socket end. The cleaning tube may be designed as a straight tube piece which is inserted in straight pipe sections or, alternatively, in a pipe bend with a given angle. Cleaning tubes may e.g. be used for pipe systems for drain water, thereby achieving the possibility of removing deposited elements or possibly alien bodies.

Most often, the cleaning tube is made as a straight tube member at the side of which there is a projecting pipe stub which is closed with a door. If the cleaning tube is made in plastic, the door is usually closed with an internal bayonet joint or with an external screw cap. On the other hand, if the tube is made of cast iron, there are often two or more threaded pins projecting from the pipe stub to which a door may be fastened. These types may in some cases be made with an insert which is either attached to the door or separately in the pipe stub, where insert has the purpose of filling the recess appearing where the pipe stub is mounted. By smoothing out this recess, a more unimpeded flow is attained in the tube.

Among other types may be mentioned cleaning tubes of galvanised steel, where the cleanout door is normally secured by a clamp around the protruding end of the pipe stub.

In the prior art cleaning tube, there is often a design of the cleanout opening and the door so that there is no easy access through the cleanout opening.

From WO 89/05418 there is known a cleaning tube of the type mentioned in the introduction, where easy access is provided through the cleanout opening.

Another cleaning tube according to the preamble of claim 1 is know from document US 37 24505.

It is the purpose of the invention to indicate a cleanout tube to a pipe system where there is achieved an optimal and free and unhindered through-flow, e.g. of drain water, and which pipe system is preferably suited for applications where the pressure is up to 3 bars.

The cleaning tube according to the invention is peculiar in that it includes means ensuring unhindered flow through the cleaning tube, and which includes a collar part on the cleaning tube and an elastic sheet packing mounted on the cleanout door, and which by closed cleanout opening abuts on the collar part on the cleaning tube, whereby the sheet packing is compressed at contact with the collar part so that inside the cleaning tube there are no projections/recesses which are larger than at the joint of two smooth pipes.

According to a special embodiment of the invention, the cleaning tube is designed for an internal overpressure preferably in the order of magnitude 3 bars.

With a cleaning tube according to the invention, optimal efficiency in achieved during operation since by e.g. cleaning, access to the interior of the pipe system may easily be provided, and since no kind of depositing occurs in connection with the cleanout door during common operation. This property is achieved by ensuring a smooth and undisturbed passage through the pipe system, furthermore implying a markedly better self-cleaning of the pipe system and also ensuring more time between service intervals such as cleaning.

The cleanout opening may alternatively have other shapes than circular. For example, a cleaning tube where the opening has greater extension in longitudinal direction of the cleaning tube than in transverse direction can easily be made, so that the cleanout opening has elongated shape. Hereby is achieved still better access to the interior of the tube. By such variants, it maybe suitable to have plural hinges and/or closing means at each cleanout door.

The cleaning tube is made with unhindered flow through the tube, as the said elastic sheet packing by closed cleanout opening abuts on the collar part on the cleaning tube. Hereby, the sheet packing is compressed by contact with the collar part so that internally of the cleaning tube there are no projections/recesses which are larger than at the joint of two smooth pipes.

The sheet packing will, when the cleanout door is closed and tightened, be compressed at the location of the collar part, but at the area constituting the cleanout opening itself in the cleaning tube, the sheet packing will, due to its elasticity, fairly well fill out the entire recess naturally appearing between cleaning tube and cleanout door. This filling is of particularly great importance as hereby is ensure an optimal and free passage of e.g. drain water. Thus there are no edges onto which solids occurring in the drain water may be attached, thereby clogging the pipe system. With this smooth interior there is also, as mentioned, achieved a self-cleaning effect.

Furthermore, a broader application area may be achieved as the system is developed for pressure up to 3 bars. This may occur by suitable dimensioning and designing the sheet packing and the collar part as well as closing means.

According to a special embodiment, the cleaning tube according to the invention is peculiar in that the cleanout door is provided pivoting via a hinge and with a closing means, and that the cleanout door is fastened with fastening means, preferably with a screw, which is adapted for fastening in a counterpart adapted therefor. The cleaning tube may be designed with the closing means of the cleanout door, the counterpart of the cleaning tube and the fastening means being fitted so that there are no loose members, like screws or similar, when the cleanout door is opened. Alternatively, the closing means may have other common embodiments.

By not having to worry about diverse small parts, it is associated with greater safety in connection with opening the cleanout door simultaneously with it being convenient not having to take care of screws and nuts, of course.

In an alternative embodiment, the cleaning tube is designed so that the fastening means of the cleanout door may be operated without use of tools.

This variant is particularly applicable in several different environments, inter alia if it is important to open rapidly, or if the cleaning tube is disposed in an area where tools are not or are not to be present readily.

In the following, the invention is described with reference to the drawing, which, without being limiting, shows a preferred embodiment for a cleaning tube according to the invention, and where:
- Fig. 1: shows a cleaning tube according to the invention, viewed isometrically from the hinge side and with a closed cleanout door,
- Fig. 2: shows the cleaning tube as in Fig. 1, but here with open cleanout door,
- Fig. 3: shows the cleaning tube viewed from the other side, and
- Fig. 4: shows the collar part of the cleaning tube in detail.

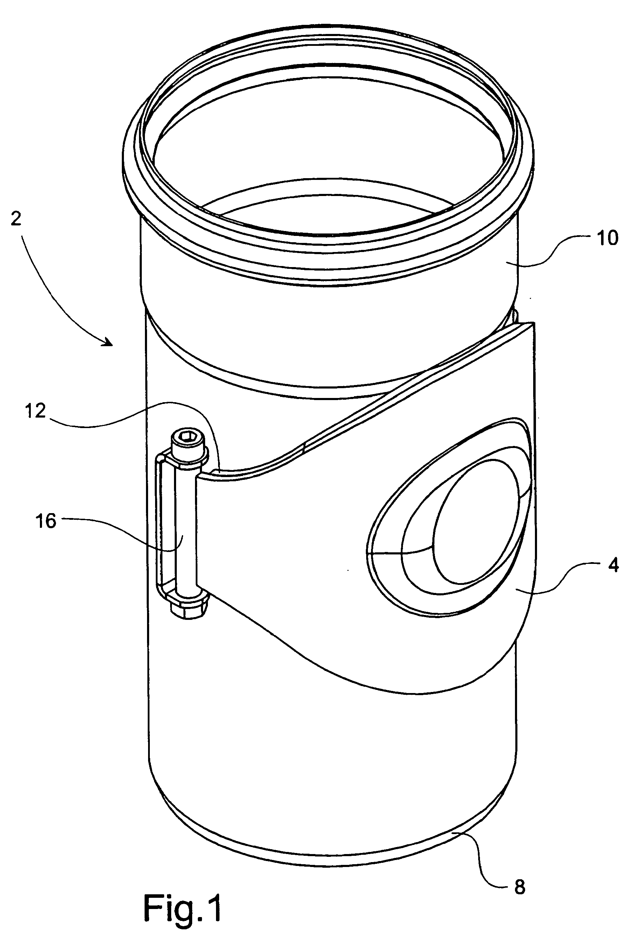

In Fig. 1 is seen a cleaning tube 2 isometrically from the hinge side and with a cleanout door 4 closed. The upwardly directed end of the cleaning tube 2 is made with a socket end 10, and at the other end the tube is made with a spigot 8. The spigot end 8 and the socket end 10 are made exactly as on common drain pipes. At the front is seen the closed cleanout door 4 which is fastened to the cleaning tube 2 with a hinge 16 about which the cleanout door 4 may be turned away in order thereby to ensure optimal access to the interior of the cleaning tube 2.

On the cleanout door 4 there is fitted an elastic sheet packing 12 made of a material which can stand/is approved for the environment concerned. In Fig. 1, the elastic sheet packing 12 may be seen faintly between the cleanout door 4 and the cleaning tube 2.

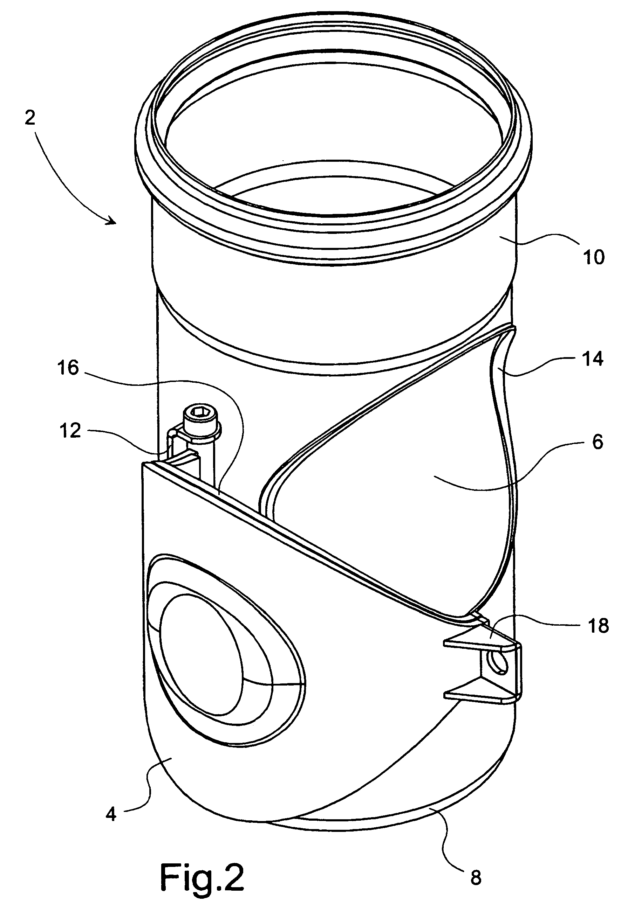

Fig. 2 shows the same cleaning tube 2 as Fig. 1, but here it is seen with the cleanout door 4 open. The cleanout door 4 is here shown only partly open, and it is to be noted that the cleanout door 4 may be opened significantly more, whereby is ensured optimal access to the interior of the pipe. In Fig. 2 is also seen that the cleaning tube 2 around the cleanout opening has a collar part 14 which, together with the elastic sheet packing 12, provide optimal sealing between the cleaning tube 2 and the cleanout door 4.

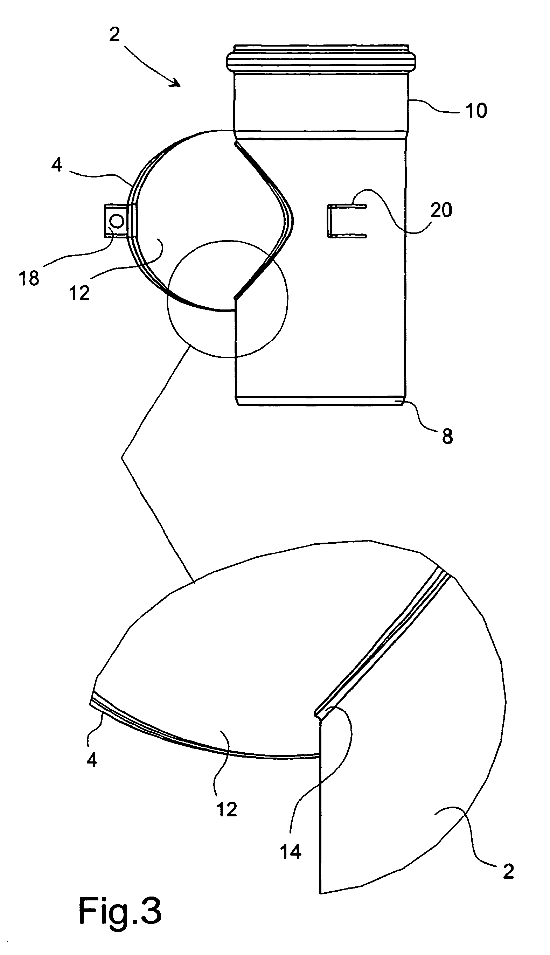

Fig. 3 shows the cleaning tube 2 with open cleanout door 4 as seen from the side and a detail showing the collar part 14 on the cleaning tube 2.

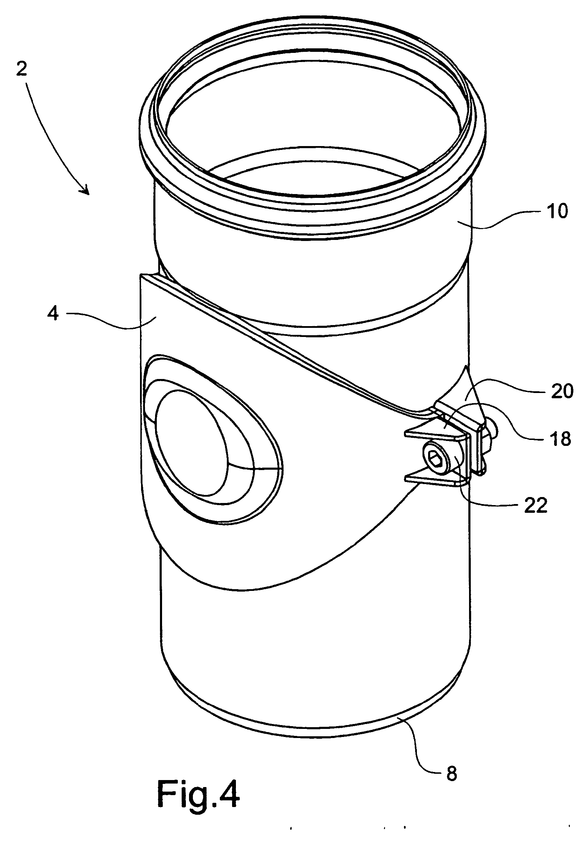

In Fig. 4, the cleaning tube 2 is shown from the other side, where a closing means 18 on the cleanout door 4 is clearly seen. The closing means 18 interacts with fastening means 22, preferably a screw 22, which is adapted for fastening in a counterpart 20 adapted therefor on the cleaning tube.

The example shown here is a commonly known method and may without any problems be substituted by other known methods for joining parts or closing cleanout doors.

## Claims

1. A cleaning tube of the type adapted for mounting in pipe systems and preferably in drainage systems made of stainless steel, where the cleaning tube is provided with a cleanout door (4), which by opening provides access to the interior of the tube through a cleanout opening (6), the cleaning tube (2) being adapted for mounting in pipe sections where the orientation of the tube between vertical and horizontal planes is without significance for the function of the cleaning tube, and where the cleaning tube (2) is made with a cleanout opening (6) having a dimension in transverse and/or longitudinal direction substantially corresponding to the internal diameter of the cleaning tube, the cleaning tube including means (12,14) ensuring unhindered flow through the cleaning tube (2), and which includes a collar part (14) on the cleaning tube (2) and an elastic sheet packing (12) mounted on the cleanout door (4), and which by closed cleanout opening (6) abuts on the collar part (14) on the cleaning tube (2), whereby the sheet packing (12) is compressed at contact with the collar part (14) so that inside the cleaning tube (2) there are no projections/recesses which are larger than at the joint of two smooth pipes, **characterised in that** the sheet packing fills, when the cleanout door is closed, at the area constituting the cleanout opening itself in the cleaning tube, the entire recess appearing between cleaning tube and cleanout door.

2. A cleaning tube according to claim 1, **characterised in that** the cleaning tube (2) is designed for an internal overpressure, preferably in the order of magnitude 3 bars.

3. A cleaning tube according to claim 1 or 2, **characterised in that** the cleanout door (4) is provided with a hinge (16) and with a closing means (18), and that the cleanout door (4) is fastened with fastening means (22), preferably with a screw (22), which is adapted for fastening in a counterpart (20) adapted therefore on the cleaning tube.

4. A cleaning tube according to any preceding claim, **characterised in that** closing means (18) of the cleanout door, the counter part (20) of the cleaning tube and the fastening means (22) are all mounted so that there are no loose parts such as screws or the like, when the cleanout door (4) is opened.

5. A cleaning tube according to any preceding claim, **characterised in that** the closing means of the cleanout door and the fastening means (18, 20, 22) may be operated without using tools.

## Patentansprüche

1. Reinigungsrohr des Typs, der so beschaffen ist, dass er in Rohrsystemen und vorzugsweise in Drainagesystemen aus rostfreiem Stahl montiert werden kann, wobei das Reinigungsrohr mit einer Räumungstür (4) versehen ist, die durch Öffnen einen Zugang zum Innenraum des Rohrs durch eine Räumungsöffnung (6) schafft, wobei das Reinigungsrohr (2) so beschaffen ist, dass es in Rohrabschnitten montiert werden kann, in denen die Orientierung des Rohrs zwischen vertikalen und horizontalen Ebenen ohne Bedeutung für die Funktion des Reinigungsrohrs ist, und wobei das Reinigungsrohr (2) mit einer Räumungsöffnung (6) hergestellt ist, deren Abmessung in Quer- und/oder Längsrichtung im Wesentlichen dem Innendurchmesser des Reinigungsrohrs entspricht, wobei das Reinigungsrohr Mittel (12, 14) aufweist, die einen ungehinderten Fluss durch das Reinigungsrohr (2) sicherstellen und einen Kranzabschnitt (14) am Reinigungsrohr (2) sowie eine elastische Flächendichtung (12), die an der Räumungstür (4) angebracht ist und bei geschlossener Räumungsöffnung (6) an dem Kranzabschnitt (14) am Reinigungsrohr (2) anliegen, enthalten, wodurch die Flächendichtung (12) in Kontakt mit dem Kranzabschnitt (14) zusammengedrückt wird, so dass in dem Reinigungsrohr (2) keine Vorsprünge/Ausnehmungen vorhanden sind, die größer als an der Verbindungsstelle von zwei glatten Rohren sind, **dadurch gekennzeichnet, dass** die Flächendichtung bei geschlossener Räumungstür in dem Bereich, der die eigentliche Räumungsöffnung in dem Reinigungsrohr bildet, die gesamte Vertiefung, die zwischen dem Reinigungsrohr und der Räumungstür vorhanden ist, füllt.

2. Reinigungsrohr nach Anspruch 1, **dadurch gekennzeichnet, dass** das Reinigungsrohr (2) für einen internen Überdruck vorzugsweise in der Größenordnung von 3 Bar entworfen ist.

3. Reinigungsrohr nach Anspruch 1 oder 2, **dadurch gekennzeichnet, dass** die Räumungstür (4) mit einem Scharnier (16) und mit Schließmitteln (18) versehen ist und dass die Räumungstür (4) mit Befestigungsmitteln (22) befestigt ist, vorzugsweise mit einer Schraube (22), die so beschaffen ist, dass sie in einem hierfür vorgesehenen Gegenstück (20) am Reinigungsrohr befestigt werden kann.

4. Reinigungsrohr nach einem vorhergehenden Anspruch, **dadurch gekennzeichnet, dass** die Schließmittel (18) der Räumungstür, das Gegenstück (20) des Reinigungsrohrs und die Befestigungsmittel (22) sämtlich so angebracht sind, dass keine losen Teile wie etwa Schrauben oder dergleichen vorhanden sind, wenn die Räumungstür (4) geöffnet ist.

5. Reinigungsrohr nach einem vorhergehenden Anspruch, **dadurch gekennzeichnet, dass** die Schließmittel der Räumungstür und die Befestigungsmittel (18, 20, 22) ohne Werkzeuge betätigt werden können.

## Revendications

1. Tube de nettoyage du type adapté pour être monté dans des systèmes de tuyaux et de préférence dans des systèmes de purge constitués d'acier inoxydable, dans lequel le tube de nettoyage est muni d'une porte de visite (4) qui, en s'ouvrant, offre un accès à l'intérieur du tube par le biais d'une ouverture de visite (6), le tube de nettoyage (2) étant adapté afin d'être monté dans des sections de tuyaux dans lesquelles l'orientation du tube entre des plans verticaux et horizontaux n'est pas significative pour la fonction du tube de nettoyage, et dans lequel le tube de nettoyage (2) est muni d'une ouverture de visite (6) possédant une dimension dans une direction transversale et/ou longitudinale correspondant sensiblement au diamètre interne du tube de nettoyage, le tube de nettoyage comprenant des moyens (12, 14) garantissant un écoulement libre dans le tube de nettoyage (2), et comprenant une partie de collier (14) sur le tube de nettoyage (2) et une garniture en feuille élastique (12) montée sur la porte de visite (4), et qui, lorsque l'ouverture de visite (6) est fermée, bute contre la partie de collier (14) sur le tube de nettoyage (2), moyennant quoi la garniture en feuille (12) est comprimée au niveau d'un contact avec la partie de collier (14) de telle sorte que, à l'intérieur du tube de nettoyage (2), il n'y ait aucune saillie/aucun renfoncement qui soit plus grand(e) qu'au niveau du joint entre deux tuyaux lisses, **caractérisé en ce que** la garniture en feuille remplit, lorsque la porte de visite est fermée, la zone constituant l'ouverture de visite elle-même dans le tube de nettoyage, le renfoncement entier apparaissant entre le tube de nettoyage et la porte de visite.

2. Tube de nettoyage selon la revendication 1, **caractérisé en ce que** le tube de nettoyage (2) est conçu pour résister à une surpression interne, de préférence d'une magnitude de l'ordre de 3 bar.

3. Tube de nettoyage selon la revendication 1 ou 2, **caractérisé en ce que** la porte de visite (4) est munie d'une charnière (16) et de moyens de fermeture (18), et **en ce que** la porte de visite (4) est fixée avec des moyens de fixation (22), de préférence avec une vis (22), qui sont adaptés afin de se fixer dans une contrepartie (20) adaptée par conséquent sur le tube de nettoyage.

4. Tube de nettoyage selon l'une quelconque des revendications précédentes, **caractérisé en ce que** les moyens de fermeture (18) de la porte de visite, la contrepartie (20) du tube de nettoyage et les moyens de fixation (22) sont tous montés de telle sorte qu'il n'y ait aucune pièce desserrée, telle que des vis ou similaires, lorsque la porte de visite (4) est ouverte.

5. Tube de nettoyage selon l'une quelconque des revendications précédentes, **caractérisé en ce que** les moyens de fermeture de la porte de visite et les moyens de fixation (18, 20, 22) peuvent être actionnés sans utiliser d'outils.
